# EUROPÄISCHE PATENTSCHRIFT

(11) **EP 3 093 525 B1**
(45) Veröffentlichungstag und Bekanntmachung des Hinweises auf die Patenterteilung: **21.03.2018**
(21) Anmeldenummer: 16450007.6
(22) Anmeldetag: 24.03.2016
(51) Int. Cl.: F16G 11/00, B63B 35/00, F16B 21/07, F16G 11/10, F16G 11/14

(54) **MECHANISCHE VERBINDUNG**
MECHANICAL CONNECTION
LIAISON MECANIQUE

(30) Priorität: 25.03.2015 AT 1732015
(43) Veröffentlichungstag der Anmeldung: 16.11.2016
(73) Patentinhaber: Granitzer, Christopher, 2340 Mödling (AT)
(72) Erfinder: Granitzer, Christopher, 2340 Mödling (AT)
(74) Vertreter: Sonn & Partner Patentanwälte

(56) Entgegenhaltungen:
- DE-A1-102008 006 135
- US-A- 4 947 704

## Beschreibung

Die Erfindung betrifft eine Einrichtung mit den Merkmalen des einleitenden Teils von Anspruch 1.

Die Erfindung betrifft insbesondere eine mechanische Einrichtung, welche insbesondere der Aufnahme von Kräften, beispielweise verursacht durch einaxiale Kräfte, wie Seilkräfte, dienen kann.

Einrichtungen der gattungsgemäßen Bauart sind in unterschiedlichen Ausführungen bekannt. So wird beispielsweise ein mechanisches Verbindungselement unter der Publikationsnummer EP 2166895 B1 beschrieben, welches zwei Verschlussteile formschlüssig verbindet und den Verschluss durch magnetische Kräfte beim Fügen und Auseinandernehmen unterstützt, wobei die Teile durch Rotation in und aus ihrer Fügung gedreht werden können.

Weiters ist aus der US 6182336 B1 ebenfalls magnetischer Verschluss bekannt, welcher durch Zusammenstecken zweier Verschlussteile geschlossen und durch eine Schnappverbindung gekuppelt wird.

Jedem dieser bekannten Verschlüsse liegt eine formschlüssige Verbindung zugrunde, die so ausgeführt ist, dass diese wieder zu lösen ist.

Schnappverbindungen mit einer stiftförmigen Basis und einem ringförmigen Schnappschloss sind beispielsweise aus EP 0921327 A, DE 102008006135 A oder WO 2014/102905 A bekannt. US 4947704 A offenbart eine Einrichtung zum Halten einer in einem langgestreckten Element gebildeten Schlaufe gemäß des Oberbegriffs des Anspruch 1.

Die Verbindung von Seilen mit anderen Körpern wird beispielsweise durch Anschlagmittel hergestellt. Seilkauschen oder Schlaufen werden in Karabiner eingehängt. Karabiner mit der Schlaufe werden ihrerseits in eine Öse oder in einen Ring eingehängt. Die Öse oder der Ring sind mit einer Befestigungseinrichtung, beispielweise einer Verschraubung, verbunden.
Bekannte Seilverbindungen werden über Seilschlaufen zu Karabiner zu einem weiteren Element, beispielsweise einem Anschlagpunkt, bestehend aus Bolzen und Ring, hergestellt. Bei diesen bekannten Verbindungen können bereits vier Elemente unter Einfluss der Zugkraft versagen.
Der Erfindung liegt die Aufgabe zu Grunde, eine Einrichtung zu Verfügung zu stellen, die den Kraft und Formschluss einer mechanischen Verbindung durch Einwirken der anliegenden Kräfte unterstützt und verstärkt, sowie den Kraftfluss weiter zu leiten.
Dies wird erfindungsgemäß durch die Merkmale von Anspruches 1 erreicht. Vorteilhafte Ausgestaltungen der erfindungsgemäßen Einrichtung sind Gegenstand der Unteransprüche.

Durch den Aufbau der Einrichtung gemäß der Erfindung wird nicht nur der Formschluss unterstützt. Sollte es zu einem Versagen von in der Schlaufe angeordneten Teilen kommen, ausgenommen des Basisteils, ist die Verbindung nach wie vor aufrecht. Erst nach Versagen der Schlaufe oder des Basisteils wird die Verbindung gestört.

Es ist ein Vorteil der Erfindung, dass es möglich ist, die Verbindung schnell und einfach herzustellen, ohne dabei auf die Zuverlässigkeit der Verbindung verzichten zu müssen. Zudem ist es sehr praktisch, dass die Verbindung wieder leicht zu lösen ist.

In einer Ausführungsform zeichnet sich die erfindungsgemäße Einrichtung dadurch aus, dass die unter Zug befindliche Schlaufe die innen liegenden Teile des Tragringes, daher die Backen und das elastische Element zusammenzieht und einen Formschluss mit dem Basisteil herstellt. Die Schlaufe die über den Backen liegt, kann durch Anheben des Abziehers geweitet werden, wobei der Formschluss zum Basisteil aufgehoben wird.

In einer Ausführungsform kann vorgesehen sein, dass der Tragring die Schlaufe, die Backen und das elastische Element aufnimmt und die Schlaufe durch diesen geführt ist. Die Durchführung des Tragringes für das langgestreckte Element ist vorzugsweise mit Radien ausgestatten, um einer Seilquetschung vorzubeugen.

In einer Ausführungsform kann vorgesehen sein, dass ein Tragring durch den Abzieher geführt ist, der die Backen durchgreifen lässt.

In einer Ausführungsform kann vorgesehen sein, dass die Backen eine vorzugsweise konkave, Schrägfläche besitzen, über welche die Backen beim Anheben des Abziehers radial nach Außen geschoben werden.

Die Backen drücken das elastische Element radial nach außen und weiten die Schlaufe auf.

Beispielsweise ist bei der Erfindung vorgesehen, dass den Backen ein elastisches Element zugeordnet ist. Es kann aber auch jeder Backe jeweils ein elastisches Element zugeordnet sein, sodass die Backen zur Mitte radial nach innen verschoben werden.

Beispielsweise ist bei der Erfindung vorgesehen, dass das elastische Element die Backen verschiebt und nicht von der Schlaufe umgeben ist. Das elastische Element kann auch außerhalb, oberhalb und unterhalb der Schlaufe liegen.

Beispielsweise ist bei der Erfindung vorgesehen dass der Basisteil eine formschlüssige Verbindung mit den Backen und dem Abzieher bildet. Der Basisteil kann auch zum Befestigen als Schraubenkopf ausgestaltet werden. Der Basisteil kann über eine Montagescheibe verfügen, welche Durchführungen zum Verbinden mit anderen Teilen aufweist.

Beispielweise ist die erfindungsgemäße Einrichtung so ausgebildet, dass sie unter Zug um die Hauptachse des Basisteils drehbar bleibt solange es zu keinem Reibschluss mit dem Basisteil kommt.

Beispielsweise ist bei der Erfindung vorgesehen, dass die Backen den Abzieher axial an den Tragring pressen, wenn auf das die Schlaufe bildende langgestreckte Element Zug ausgeübt wird.

Die Erfindung wird unter Bezugnahme auf ein Ausführungsbeispiel, das in den Zeichnungen schematisch dargestellt ist, weiter erläutert.
Fig. 1 zeigt die Einrichtung in einer freien Ansicht,
Fig. 2 zeigt in einer Draufsicht den Mechanismus der Einrichtung,
Fig. 3 zeigt in einer freien Ansicht den Eingriff der innen liegenden Verbindungselemente,
Fig. 4 zeigt in einer freien Ansicht Verbindungselemente und
Fig. 5 zeigt in einer freien Ansicht wesentliche Teile zum Lösen der Verbindung.

Durch eine Schlaufe 1 werden unter Zug Backen 3, die radial am Umfang verteilt sind, zusammengezogen. Da es sich bei dieser Verbindung um einen Schnappverschluss handelt, werden die Backen 3 durch ein elastisches Element 2 bereits ohne Zug der Schlaufe 1 in Richtung zum Mittelpunkt verschoben. Die Backen 3, das elastische Element 2 sowie die Schlaufe 1 liegen im Inneren eines Tragringes 4.

Durch den Eingriff der Backen 3 in den Basisteil 5 wird eine formschlüssige Verbindung der Teile hergestellt.
Ein Abzieher 6 wird durch den Tragring 4 geschützt und ist axial verschiebbar.

Der Abzieher 6 ist durch die Mitte des Tragringes 4 geführt und lässt die Backen 3 in die Mitte ragen. Die Backen 3 verfügen über eine schräge Fläche, welche bevorzugt konkav ausgeführt ist. Durch Anheben des Abziehers 6 werden die Backen 3 radial nach außen geschoben sowie die Schlaufe 1 und das elastische Element 2 aufgeweitet. Der Formschluss ist aufgehoben und der Abzieher 6, der Tragring 4 sowie seinen innenliegenden Teile nämlich die Schlaufe 1, das elastische Element 2 und die Backen 3 können vom Basisteil 5 abgehoben werden.

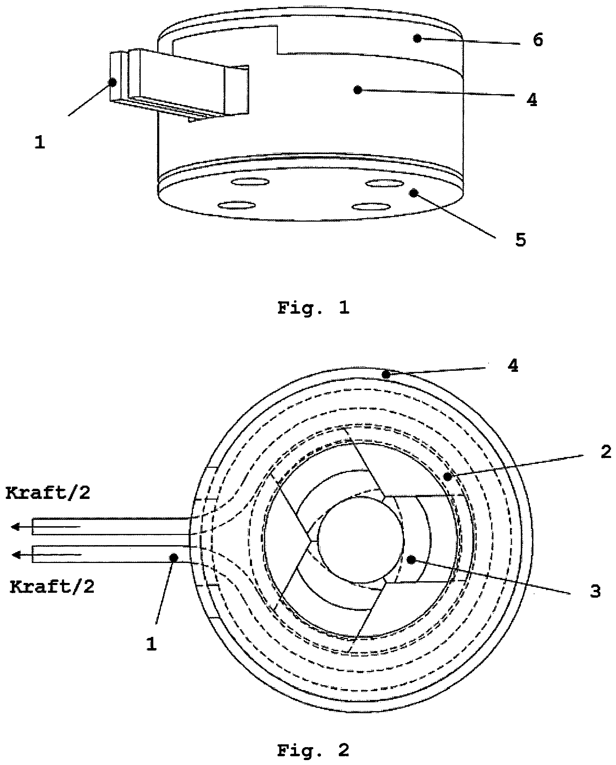

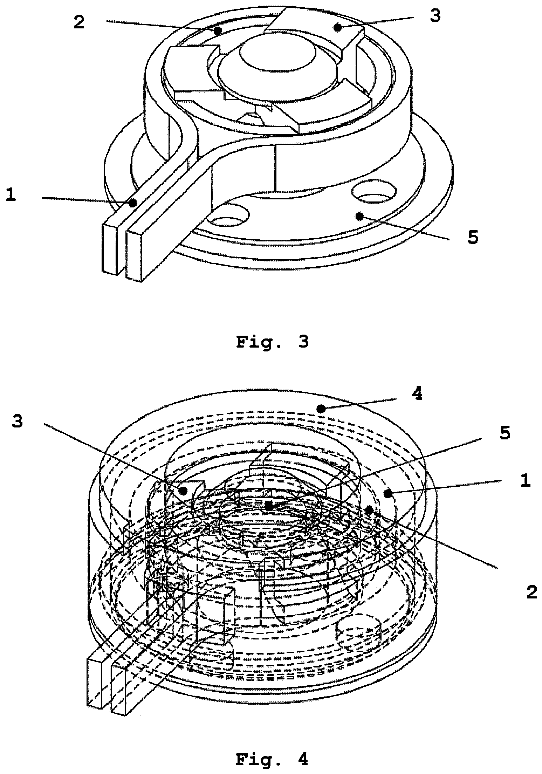

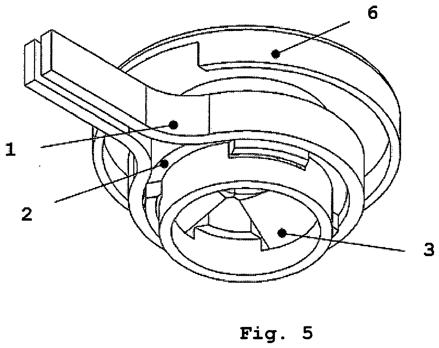

Die erfindungsgemäße Einrichtung zum Halten einer Schlaufe 1, die von einem langgestrecktem Element gebildet ist, wie sie in den Fig.1 bis 5 als Ausführungsbeispiel gezeigt ist, weist die nachstehend beschriebene Konstruktion und Funktion auf:

Die erfindungsgemäße Einrichtung umfasst einen Basisteil 5, der einen Ansatz aufweist, der die Form eines Zapfens hat und der mit Abstand von seinem freien Ende eine nach außen offene Ringnut aufweist.

Rings um den Zapfen des Basisteils 5 ist ein Tragring 4 angeordnet, in dem drei Backen 3 radial von außen nach innen und zurück verschiebbar aufgenommen sind.

Über die äußeren Enden der Backen 3, die in dem Tragring 4 verschiebbar aufgenommen sind, ist ein elastisches Element 2 gelegt, das die Backen 3 radial nach innen belastet und sie so verschiebt, dass sie in die Nut in dem zapfenförmigen Ansatz des Basisteils 5 eingreifen. So wird der Tragring 4 mit dem Basisteil 5 formschlüssig gekuppelt.

Außerhalb des elastischen Elements 2, das im Ausführungsbeispiel als Ring aus elastischem Werkstoff ausgebildet ist, ist eine Schlaufe 1 gelegt.

Wenn auf das langgestreckte Element, das die Schlaufe 1 bildet, in Richtung der Pfeile, die in Fig. 2 mit Kraft/2 bezeichnet sind, Zug ausgeübt wird, hat dies zur Folge, dass der Eingriff der inneren Enden der Backen 3 in die Nut im zapfenförmigen Ansatz des Basisteils 5 unterstützt wird, sodass die Verbindung, also der Zusammenhalt der Bauteile der erfindungsgemäßen Einrichtung, unterstützt wird.

Auf der Oberseite des Tragringes 4, also auf der dem Basisteil 5 gegenüberliegenden Seite des Tragringes 4, ist ein Abzieher 6 angeordnet. Der Abzieher 6 weist den inneren Enden der Backen 3 zugeordnete Schrägflächen auf, sodass durch Entfernen (Abheben) des Abziehers 6 vom Basisteil 5 weg die Backen 3 radial nach außen geschoben werden. Dies hat zur Folge, dass sowohl die Schlaufe 1 als auch das elastische Element 2 radial aufgeweitet werden und schließlich der Formschluss zwischen den inneren Enden der Backe 3 und dem zapfenförmigen Ansatz des Basisteils 5 aufgehoben wird, so dass die erfindungsgemäße Einrichtung auseinander genommen werden kann.

Um die Bewegung der Backen 3 radial nach außen durch Anhebung des Abziehers 6 zu unterstützen, weisen die Backen 3 Schrägflächen auf, die den Schrägflächen des Abziehers 6 zugeordnet sind.

Ein vorteilhafter Effekt dieser Konstruktion ist es, das bei Zug an dem die Schlaufe 1 bildenden, langestreckten Element (Kraft 2) der Abzieher 6 von den Backen 3 in Richtung auf den Tragring 4 hin belastet wird, sodass der Zusammenhalt der erfindungsgemäßen Einrichtung insbesondere auch gewährleistet ist, wenn am langestreckten Element Zug ausgeübt wird.

Es wird eine mechanische Verbindung beschrieben, die unter Einfluss von Kräften auf die Schlaufe 1 (gebildet durch eine Leine, Gurt, Seil, Band, Kette oder ähnlichem) die formschlüssige Verbindung zwischen den Teilen unterstützt und verstärkt.
Die Verbindungsteile bestehen aus einem Basisteil 5 welche mit der zusammenhängenden Baugruppe bestehend aus Abzieher 6, Tragring 4 sowie den eingreifenden Backen 3 und deren zugeordnetes elastisches Element 2 und der Schlaufe 1 zusammengeführt werden. In den Basisteil 5 greifen eine oder mehrere radial geführte Backen 3 ein. Die Backen 3 werden durch ein elastisches Element 2 radial in die Mitte gedrängt. Die Schlaufe 1 umgreift die Backen 3 sowie den Abzieher 6 und gegebenenfalls das elastische Element 2. Die Freiheit der Rotation um die Hauptachse des Basisteils 5 zu den übrigen Verbindungselementen bleibt aufrecht.

Zusammenfassend kann ein bevorzugtes Ausführungsbeispiel der Erfindung wie folgt beschrieben werden:

Eine Einrichtung zum Halten einer Schlaufe 1 umfasst einen Basisteil 5 und eine zusammenhängende Baugruppe umfassend einen Abzieher 6, einen Tragring 4 in dem Basisteil 5 eingreifende Backen 3 und ein den Backen 3 zugeordnetes elastisches Element 2. Die radial geführten Backen 3 greifen in den Basisteil 5 formschlüssig ein. Die Backen 3 werden durch das elastische Element 2 radial nach innen belastet. Die Schlaufe 1 umgreift die Backen 3 sowie den Abzieher 6 und gegebenenfalls das elastische Element 2. Die Freiheit der Rotation um die Hauptachse des Basisteils 5, ist gegenüber den übrigen Verbindungselementen frei drehbar. Durch Zug an dem die Schlaufe 1 bildenden Element wird die formschlüssige Verbindung zwischen den Teilen unterstützt und verstärkt.

## Patentansprüche

1. Einrichtung zum Halten einer in einem langgestreckten Element gebildeten Schlaufe (1), mit einem Basisteil (5), einem Tragring (4), in dem radial verschiebbar Backen (3) angeordnet sind, **gekennzeichnet durch** wenigstens ein elastisches Element (2), das die Backen (3) radial nach innen belastet, wobei, wenn die Schlaufe (1) an den radialen äußeren Enden der Backen (3) anliegt, die Backen (3) in ihrer nach innen vorgeschobenen Stellung formschlüssig in den Basisteil (5) eingreifen, und **gekennzeichnet durch** einen Abzieher (6), der gegenüber dem Basisteil (5) und dem Tragring (4) axial verstellbar ist, um die Backen (3) radial nach außen zu drücken und deren formschlüssigen Eingriff in den Basisteil (5) aufzuheben.

2. Einrichtung durch Anspruch 1, **dadurch gekennzeichnet, dass** die radial inneren Enden der Backen (3) in eine ringförmige Nut im Basisteil (5) eingreifen, wobei die Nut vorzugsweise in einem Ansatz des Basisteils (5) vorgesehen ist.

3. Einrichtung nach Anspruch 1, **dadurch gekennzeichnet, dass** die Backen (3) Schrägflächen aufweisen, die an Schrägflächen des Abziehers (6) anliegen.

4. Einrichtung nach einem der Ansprüche 1 bis 3 mit einem in einem langgestreckten Element gebildeten Schlaufe, **dadurch gekennzeichnet, dass** der Tragring (4) die Backen (3) und das elastische Element (2) sowie die Schlaufe (1) aufnimmt, und dass die zur Schlaufe (1) führenden Teile des langgestreckten Elements durch eine seitliche Öffnung des Tragringes (4) aus diesem herausgeführt sind.

5. Einrichtung nach einem der Ansprüche 1 bis 4 mit einem in einem langgestreckten Element gebildeten Schlaufe, **dadurch gekennzeichnet, dass** die Schlaufe (1) über das ringförmig ausgebildete, elastische Element (2) an den Backen (3) anliegt.

## Claims

1. Device for holding a loop (1) formed in an elongate element, comprising a base portion (5) and a supporting ring (4), inside which radially movable jaws (3) are arranged, **characterised by** at least one resilient element (2) which loads the jaws (3) in a radially inward manner, the jaws (3) engaging in their inwardly advanced position in the base portion (5) in a form-fitting manner when the loop (1) rests against the radial outer ends of the jaws (3), and **characterised by** a disconnector (6), which can be axially moved with respect to the base portion (5) and the supporting ring (4) so as to push the jaws (5) radially outwards and cancel the form-fitting engagement of said jaws in the base portion (5).

2. Device according to claim 1, **characterised in that** the radially inner ends of the jaws (3) engage in the base portion (5) in an annular slot, said slot preferably being provided in an attachment to the base portion (5).

3. Device according to claim 1, **characterised in that** the jaws (3) have sloping surfaces, which rest against sloping surfaces of the disconnector (6).

4. Device according to any of claims 1 to 3, comprising a loop formed in an elongate element, **characterised in that** the supporting ring (4) receives the jaws (3), the resilient element (2) and the loop (1), and **in that** the portions of the elongate element leading to the loop (1) extend out of the supporting ring through a lateral opening in said supporting ring (4).

5. Device according to any of claims 1 to 4, comprising a loop formed in an elongate element, **characterised in that** the loop (1) rests against the jaws (3) over the resilient annular element (2).

## Revendications

1. Dispositif pour le maintien d'une boucle (1) formée dans un élément allongé, avec une partie de base (5), un anneau de support (4), dans lequel des mors (3) sont disposés de manière coulissante radialement, **caractérisé par** au moins un élément élastique (2), qui précontraint les mors (3) radialement vers l'intérieur, moyennant quoi, lorsque la boucle (1) s'appuie contre les extrémités radiales externes des mors (3), les mors (3) s'emboîtent, dans leur position poussée vers l'intérieur, par complémentarité de forme dans la partie de base (5) et **caractérisé par** un extracteur (6), qui est mobile axialement par rapport à la partie de base (5) et à l'anneau de support (4) afin de comprimer les mors (3) radialement vers l'extérieur et de supprimer leur emboîtement par complémentarité de forme avec la partie de base (5).

2. Dispositif selon la revendication 1, **caractérisé en ce que** les extrémités radiales internes des mors (3) s'emboîtent dans une rainure annulaire dans la partie de base (5), la rainure étant réalisée de préférence dans un embout de la partie de base (5).

3. Dispositif selon la revendication 1, **caractérisé en ce que** les mors (3) présentent des surfaces obliques qui s'appuient contre des surfaces obliques de l'extracteur (6).

4. Dispositif selon l'une des revendications 1 à 3, avec une boucle formée dans un élément allongé, **caractérisé en ce que** l'anneau de support (4) loge les mors (3) et l'élément élastique (2) ainsi que la boucle (1), et **en ce que** les parties de l'élément allongé menant vers la boucle (1) sont guidées hors de l'anneau de support (4) par une ouverture latérale de celui-ci.

5. Dispositif selon l'une des revendications 1 à 4, avec une boucle formée dans un élément allongé, **caractérisé en ce que** la boucle (1) s'appuie contre les mors (3) par l'intermédiaire de l'élément élastique (2) de forme annulaire.
